# EUROPEAN PATENT SPECIFICATION

(11) **EP 4 548 222 B1**
(45) Date of publication and mention of the grant of the patent: **29.07.2026**
(21) Application number: 23748152.8
(22) Date of filing: 30.06.2023
(51) Int. Cl.: G06F 16/23, G06F 16/25

(54) **SYSTEM AND METHOD FOR DATA RECONCILIATION FOR TRANSFER TO CLOUD STORAGE**
SYSTEM UND VERFAHREN ZUR DATENABGLEICHUNG FÜR DEN TRANSFER ZUM CLOUD-SPEICHER
SYSTÈME ET PROCÉDÉ DE RAPPROCHEMENT DE DONNÉES POUR TRANSFERT VERS UN STOCKAGE EN NUAGE

(30) Priority: 30.06.2022 US 202263357520 P
(43) Date of publication of application: 07.05.2025
(73) Proprietor: Resmed Digital Health Inc., San Diego, CA 92123 (US)
(72) Inventor: YERRAGONDA, Abhishek Reddy, San Diego, California 92123 (US); THEYE, Benjamin Albert, San Diego, California 92123 (US)
(74) Representative: Mathys & Squire
(86) International application number: PCT/US2023/026801
(87) International publication number: WO 2024/006562

(56) References cited:
- US-A1- 2018 189 332
- US-A1- 2019 066 215
- US-B1- 10 223 184

## Description

### PRIORITY CLAIM

The present disclosure claims the priority to and the benefit of U.S. Provisional Patent Application No. 63/357,520, filed June 30, 2022.

### TECHNICAL FIELD

The present disclosure relates generally to data storage, and more specifically for a system that checks data for inconsistencies in the process of uploading data streams to the Cloud.

### BACKGROUND

With the advent of so-called smart technology, the opportunity to collect data from multiple "smart" devices has become possible. The quantities of data cannot be practically stored in local storage devices such as database servers. However, access to quantities of diverse data is necessary for analysis (data mining) that can provide insights in different areas. Analysis of this data is facilitated by the advent of the Cloud, which does not require local storage of such data. Thus, collection systems rely on data storage in the Cloud for storage of large datasets for later analysis. For example, devices such as respiratory therapy devices, wearable sensors, and other data sources may be used to collect health related data. The collected health care data may be stored via a patient data management information system, such as MOSAIQ, into a single user interface for storage in a local database. The collected data in the local database may be streamed to the Cloud for storage and management. The Cloud offers greater storage capability that is managed via a Cloud platform such as Amazon Web Services (AWS) via a data integration service such as the data migration service (DMS) offered by AWS.

However, one issue is that data from local data sources that is stored in a patient management system based in the Cloud using, for example, existing data integration services such as the AWS DMS, as a target, has low data quality, missing data, and missing transactions. Such data is collected by existing data integration services using an object storage service such as Amazon Simple Storage Service (S3). In a data collection and monitoring system, the data integration service streams the data from a local data source, such as a structured language query (SQL) database server, to a healthcare database, such as an object storage service data lake in the Cloud. The existing data integration service has proven to be unreliable as the service periodically drops transactions without any error indicators. The existing data integration service still directs the flow of the data to the data lake even when the data integration service drops certain data transactions. Thus, despite dropped transactions, the data flows as usual and the errors are not caught in present systems.

Thus, current Cloud platforms such as AWS do not have data reconciliation built into their data integration products such as DMS. Data reconciliation is necessary to correct for low data quality, missing data, and missing transactions, but currently available methods are vastly complex and require using multiple services. Such methods also tend to be cumbersome and expensive from an infrastructure perspective. For example, AWS is writing a solution that loads the entire data set into a read only copy and compares the data. This solution is inadequate as it requires large infrastructure expenditure. Poor quality data because of inefficient reconciliation can lead to lost revenue, missed insights and reputation damage. Thus, data reconciliation between local databases and the Cloud is needed to ensure accurate data is being supplied to and used by applications such as advanced analytics, data science, and AI teams.

Thus, there is a need for a system that proactively validates source to target data as soon as possible after the data lands in the Cloud platform. There is also a need for a system to reduce the amount of dropped data after loading a dataset into Cloud platforms.

US 2018/189332A1 is directed to methods and systems for implementing a data recovery framework, e.g., for detecting inconsistent and/or incomplete data records and imputing, correcting, and/or estimating data to address those inconsistent and/or incomplete data records. Also provided is a computing framework whereby the process of detecting inconsistent and erroneous records and reconciling those records is configurable for use with arbitrary data sources.

### SUMMARY

The invention is defined by the features of the independent claims. Further embodiments are the subject-matter of the dependent claims. Disclosed is a method of reconciling data sent from a database server to a Cloud storage system. A data transaction is received from a structured query language (SQL) database operated by the server. The data transaction includes a source RDS instance with log sequence numbers and corresponding data records. The log sequence numbers are stored in a change data capture (CDC) table. The data transaction is streamed via a Cloud based data integration service. The data transaction is stored into an object storage service bucket via a storage object service. A data reconciliation service is executed that deploys a Cloud trail target to generate a log file of log sequence numbers from the data transaction stored in the object storage service bucket. The log file of log sequence numbers is compared with the log sequence numbers in the CDC table. A missing data record is flagged to an exception table based on the comparison. An alert of the missing data record is provided.

A further implementation of the example method is where the object storage service bucket is an AWS S3 ^{®} database or a Snowflake ^{®} database. Another implementation is where the example method further includes converting the sent data into a different format than the format of the data in the server. Another implementation is where the different format is a Parquet file. Another implementation is where the example method includes periodically reviewing the exception table and providing the alert based on the periodic review. Another implementation is where a notification lambda service periodically reviews the exception table, and the alert is based on a cloud watch log entry. Another implementation is where the alert is an email. Another implementation is where the email includes further details relating to the missing transaction. Another implementation is where a structured query language agent on the server compares the log sequence numbers and flags the missing data record to an exception table. Another implementation is where the log sequence numbers of the data transaction stored in the object storage service are determined by a parser lambda function. Another implementation is where the relational database service is one of SQL or a TIBCO ^{®} database management service. Another implementation is where the SQL server operates a database service comprising one of a SQL or a TIBCO database management service. Another implementation is where the example method includes automatically determining the missing data record from the SQL database operated by the server.

Another disclosed example is a computer program product comprising instructions which, when executed by a computer, cause the computer to carry out the above methods. Another implementation of the computer program product is where the computer program product is a non-transitory computer readable medium.

Another disclosed example is a system to facilitate reliable data storage to a Cloud based storage system. The system includes a data integration service receiving a data transaction from a structured query language (SQL) database operated by a server. The data transaction including a source instance with log sequence numbers and corresponding data records. The log sequence numbers are stored in a change data capture (CDC) table. The system includes a storage object service storing the data transaction into an object storage service bucket. A data reconciliation service deploys a Cloud trail target to generate a log file of log sequence numbers from the data transaction stored in the object storage service bucket. The data reconciliation service initiates an agent on the server to compare the log file of log sequence numbers with the log sequence numbers in the CDC table. A notification service flags a missing data record to an exception table based on the comparison and provides an alert of the missing data record.

A further implementation of the example system is where the object storage service bucket is an AWS S3 database or a Snowflake database. Another implementation is where the data management service converts the sent data into a different format than the format of the data in the server. Another implementation is where the different format is a Parquet file. Another implementation is where the notification service periodically reviews the exception table, and wherein providing the alert is based on the periodic review. Another implementation is where the notification service includes a notification lambda service periodically reviewing the exception table. The alert is based on a cloud watch log entry. Another implementation is where the alert is an email. Another implementation is where the email includes further details relating to the missing transaction. Another implementation is where a structured query language agent on the server compares the log sequence numbers and flags the missing data record to an exception table. Another implementation is where the log sequence numbers of the data transaction stored in the object storage service are determined by a parser lambda function. Another implementation is where wherein the SQL server operates a database service comprising one of a SQL or a TIBCO database management service. Another implementation is where the data reconciliation service automatically determines the missing data record from the SQL database operated by the server.

Another example is a database server coupled to the Cloud. The database server includes a storage database storing data records and an interface operable to stream the data records to a Cloud service. The database server includes a CDC table storing log sequence numbers corresponding to data records streamed to the Cloud service. The Cloud service includes a data integration service receiving data records and a storage object service storing the sent data into an object storage service bucket via a storage object service. The Cloud service includes a data reconciliation service that deploys a cloud trail target to generate a log file of log sequence numbers from the sent data stored in the object storage service bucket. The database server includes an agent that compares the log file of log sequence numbers with the log sequence numbers in the CDC table. The agent alerts a notification service of the Cloud service to flag a missing data record to an exception table based on the comparison and provide an alert of the missing data record.

The above summary is not intended to represent each embodiment or every aspect of the present disclosure. Rather, the foregoing summary merely provides an example of some of the novel aspects and features set forth herein. The above features and advantages, and other features and advantages of the present disclosure will be readily apparent from the following detailed description of representative embodiments and modes for carrying out the present invention when taken in connection with the accompanying drawings and the appended claims.

### BRIEF DESCRIPTION OF THE DRAWINGS

The disclosure will be better understood from the following description of exemplary embodiments together with reference to the accompanying drawings, in which:
FIG. 1 is a block diagram of an example health analysis system that collects data from devices used by a user and other sources;
FIG. 2 shows an example reconciliation process that flags dropped data when data is migrated to the Cloud;
FIG. 3A shows a screen image of an example query for exceptions stored in an exceptions table produced by the example data reconciliation service;
FIG. 3B shows a screen image of a detailed result responsive to the query in FIG. 3A;
FIG. 3C shows am example query that checks the CDC tables of the server such for a missing transaction;
FIG. 3D shows an example query made by an operator for the LSN time mapping table for the starting LSN;
FIG. 3E shows an example command and resulting exception table for missing transactions detected by the example DRS;
FIG. 3F is a screen shot of example alarms issued by the example DRS for missing transactions;
FIG. 4 shows a data path for a set of compatible data collection sources for storage in the Cloud; and
FIG. 5 is a flow diagram of the process of data transfer to a Cloud storage system that reconciles any discrepancies in the transferred data.

The present disclosure is susceptible to various modifications and alternative forms. Some representative embodiments have been shown by way of example, in the drawings and will be described in detail herein. It should be understood, however, that the invention is not intended to be limited to the particular forms disclosed. Rather, the disclosure is to cover all modifications, equivalents, and alternatives falling within the scope of the invention as defined by the appended claims.

### DETAILED DESCRIPTION OF THE ILLUSTRATED EMBODIMENTS

The present inventions can be embodied in many different forms. Representative embodiments are shown in the drawings, and will herein be described in detail. The present disclosure is an example or illustration of the principles of the present disclosure, and is not intended to limit the broad aspects of the disclosure to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference, or otherwise. For purposes of the present detailed description, unless specifically disclaimed, the singular includes the plural and vice versa; and the word "including" means "including without limitation." Moreover, words of approximation, such as "about," "almost," "substantially," "approximately," and the like, can be used herein to mean "at," "near," or "nearly at," or "within 3-5% of," or "within acceptable manufacturing tolerances," or any logical combination thereof, for example.

In this example, a data reconciliation service (DRS) monitors the data quality of a data pipeline streaming data from various local sources to a destination in the Cloud. As will be explained the data quality is monitored by comparing a log file of log sequence numbers of the data received in the Cloud with the log sequence numbers stored in a change data capture (CDC) table from a server. Missing log sequence numbers correspond to missing data. Thus, the DRS in this example ensures data integrations to the Cloud land high fidelity data to targets with low complexity by insuring all data lands to the targets. The example DRS monitors the data quality for a pipeline which streams the data from a local structured query language (SQL) database server to the object storage service in the Cloud via a data migration service. The example DRS allows efficient transfer of data to the Cloud service by alerting a user of the missing data and thus allows instant reconciliation of the data to the Cloud service.

The principles here apply to data integration services such as DMS from AWS that reads the transactions from a structured query language (SQL) database such as a relational database service (RDS) transaction log and converts those transactions into Parquet format and stores them into an object storage service bucket. Other data integration services that may use the DRS described herein include Qlik Replicate, Kafka, and Bryteflow. In a data collection and monitoring system, the data integration service streams the data from the SQL database server to a healthcare database such as a S3 data lake managed in the Cloud.

In this example, the DRS detects if the data integration service has dropped any transactions and thus whether there is a data gap in the data lake during the data streaming to the Cloud. Thus, the example DRS is the service deployed in parallel with the data integration service. As part of the DRS, a cloud trail trigger is deployed on an object storage service bucket into which the data integration service is streaming the received data into. In this example, the data collected is formatted in a Parquet file. Parquet is an open source file format built to handle flat columnar storage data formats. The Parquet format allows for robust data schema, more efficient compression, and facilitation of transformations. As soon as the data integration service creates a new Parquet file, which consists of transactions from the SQL database server, the cloud trail trigger generates a log file in a different object storage service bucket with all the information of the Parquet file. As soon as the log file is created in the object storage service bucket, a trigger on the log object storage service bucket with the log file, triggers a Lambda parsing function. The Lambda parsing function is a serverless compute service that runs code in response to events and automatically manages the underlying compute resources. The Lambda parsing function reads the log file, retrieves the Parquet file names, opens a Cloud object storage service bucket, reads all transactions, and writes the transaction numbers into a separate table in the source SQL database server instance.

Once the transaction numbers are stored in the source SQL database server instance, a SQL agent job compares those transaction IDs with the transactions IDs from the transaction log file. If there is a mismatch in the count, the SQL agent job moves those transactions to an exception table.

The example DRS also includes a separate Lambda notification function which reads the exception table periodically (e.g., every 15 minutes). If the Lambda notification function finds a record in the exception table, the function will alert the operator that there is a transaction which was not reconciled. Once the operator is alerted that there is a missing transaction, the operator may manually check the transaction and reprocess the missing transaction so that there are no data gaps. Alternatively, the manual function of checking may be automated via a service that is notified when an exception occurs. The service will check the transaction and automatically reprocess the missing transaction if necessary.

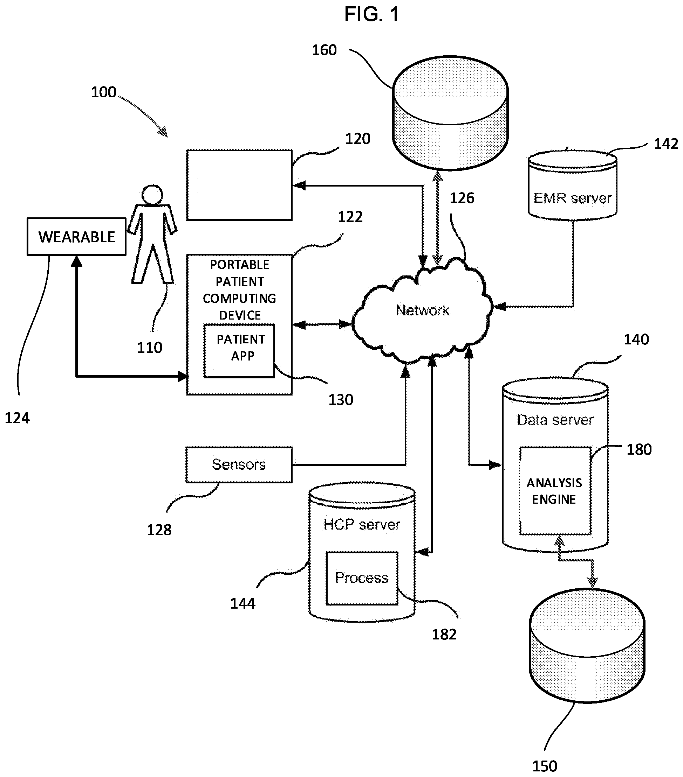

FIG. 1 shows health data collection system 100 that collects respiratory related data for different users. The health data collection system 100 is an example large scale data collection system that relies on large amounts of data from diverse sources. The health data collection system 100 therefore requires reliable transfer of data from local databases to Cloud storage in order to make collections of data available for uses such as record keeping, analysis applications, and training machine learning engines. As will be explained, the example DRS ensures efficient and reliable data streaming to Cloud storage in the system 100.

In the example health data collection system, a user 110 wearing a user interface, in the form of a mask, receives a supply of air at positive pressure from a treatment device such as a respiratory therapy device 120. In this example, the respiratory therapy device 120 delivers pressurized air to the user 110 via a conduit to a mask to increase the air pressure in the throat of the user 110 to aid in preventing the airway from closing and/or narrowing during sleep. Respiratory pressure therapy refers to the application of a supply of air to an entrance to a user's airways at a controlled target pressure that is nominally positive with respect to atmosphere throughout the user's breathing cycle (e.g., in contrast to negative pressure therapies such as the tank ventilator or cuirass). The respiratory therapy device 120 is generally used to treat individuals suffering from one or more sleep-related respiratory disorders (e.g., obstructive sleep apnea, central sleep apnea, or mixed sleep apnea).

The respiratory therapy device 120 may be used as a ventilator or a positive airway pressure (PAP) system such as a continuous positive airway pressure (CPAP) system, an automatic positive airway pressure system (APAP), a bi-level or variable positive airway pressure system (BPAP or VPAP), or any combination thereof. The CPAP system delivers a predetermined air pressure (e.g., determined by a sleep physician) to the user. The APAP system automatically varies the air pressure delivered to the user based on, for example, respiration data associated with the user. The BPAP or VPAP system is configured to deliver a first predetermined pressure (e.g., an inspiratory positive airway pressure or IPAP) and a second predetermined pressure (e.g., an expiratory positive airway pressure or EPAP) that is lower than the first predetermined pressure.

The system 100 allows for collection of respiratory related data for the user 110. The system 100 thus includes an optional external device such as a user mobile device 122, and a body mounted health monitoring device 124. The user device 122 and possibly the monitoring device 124, and the respiratory device 120 may be in communication with a network 126.

The health monitoring device 124 is generally used to aid in generating physiological data for determining an activity measurement associated with the user. The body-mounted health monitoring device 124 may be smart wearable clothing, smart watch, or a smart device, in order to capture data in a low impact manner continuously from the user 110. The activity measurement can include, for example, a number of steps, a distance traveled, a number of steps climbed, a duration of physical activity, a type of physical activity, an intensity of physical activity, time spent standing, a respiration rate, an average respiration rate, a resting respiration rate, a maximum he respiration art rate, a respiration rate variability, a heart rate, an average heart rate, a resting heart rate, a maximum heart rate, a heart rate variability, a number of calories burned, blood oxygen saturation, electrodermal activity (also known as skin conductance or galvanic skin response), or any combination thereof. The health monitoring device 134 includes one or more of the sensors described herein, such as, for example, an audio sensor, a heart rate sensor, a respiratory sensor, an ECG sensor, a photoplethysmography (PPG) sensor, an infrared sensor, an activity sensor, a radio frequency sensor, a SONAR sensor, an optical sensor, doppler radar motion sensors, a thermometer, or impedance, piezoelectric, photoelectric, or strain gauge type sensors. This data can be fused with other data sources collected during the day or data collected during certain periods of time, such as from operating the respiratory therapy device 120.

In some implementations, the health monitoring device 124 is a wearable device that can be worn by the user, such as a smartwatch, a wristband, a ring, or a patch. For example, referring to FIG. 1, the health monitoring device 124 is worn on a wrist of the user 110. The health monitoring device 124 can also be coupled to or integrated a garment or clothing that is worn by the user. Alternatively still, the health monitoring device 124 can also be coupled to or integrated in (e.g., within the same housing) the user device 122. More generally, the health monitoring device 124 can be communicatively coupled with, or physically integrated in (e.g., within a housing), the respiratory therapy device 120, and/or the user device 122.

In this example, the respiratory therapy device 120 may include electronic components to act as a communications hub to manage data transfer with other sensors 128 in the vicinity of the user 110, and transfer of the collected data to a remote storage device. Example of other sensors may include blood pressure monitors, weighing scales, sleep sensors, blood glucose monitors, and smart drug/medication adherence bins. Such data may be collected by the respiratory therapy device 120 even when the respiratory therapy device 120 is not delivering therapy itself. Alternatively, the user device 122 may collect data from the health monitoring device 124, the respiratory therapy device 120, and other data sources, and thus serve as a communications hub to manage data transfer to a remote storage device. Other devices such as home digital assistants that may communicate with the respiratory therapy device 120 may also serve as the communications hub.

The user device 122 may operate an application 130 that assist the user 110 in operation of the respiratory therapy device 120 such as facilitating compliance with a therapy regimen. The application 130 also may collect applicable data from the respiratory therapy device 120 and coordinate other data. One example of such an application is the MyAir^{™} application offered by ResMed. A user assistance application thus automatically sends user sleep data in the form of a daily score (e.g., a MyAir^{™} score) to any web-accessible device chosen by the patient. By allowing users to track their nightly sleep data and through tailored coaching, the application empowers users to stay engaged with therapy to assist in compliance. The patient application 130 may interface with the respiratory therapy device 120 and display compliance related operational data such as usage hours, mask leaks, events based on apnea-hypopnea index (AHI) and mask on/mask off events. The application 130 may also display surveys to collect user input data that may be used for different analysis. For example, surveys may ask the user about how sleepy they are after therapy and how well they are doing so far with their therapy. These responses and others data collected by the application may be stored by the collection system 100 for different purposes.

The data collected by the various components in the data collection system 100 such as the respiratory therapy device 120, mobile user device 122, health monitoring device 124, and other sensor 129 may be collected via a data server 140 and stored in a local database 150. In this example, the data server 140 is operated by an equipment provider for the respiratory therapy device 120. The contents of the local database 150 are periodically transferred to a Cloud based storage system 160. Once the data is stored in the Cloud based storage system 160, local storage may be freed up for additional data. The Cloud based storage system 160 allows storage of vast quantities of data that may be made available for different data analysis functions that may be executed by an analysis engine 180 that has access to the Cloud based storage system 160.

A health care system may include multiple users represented by the user 110. Each of the users may be using a respiratory therapy device with functionality similar to the respiratory therapy device 120, additional sensors, such as the health monitoring device 124, and associated mobile computing devices. Such systems collect data from the corresponding users requiring respiratory therapy for the data collection system 100. The underlying health care system may include the data server 140, an electronic medical records (EMR) server 142, and a health or home care provider (HCP) server 144.

These entities are all connected to, and configured to communicate with each other over the wide area network 126 such as the cloud or Internet. The connections to the wide area network 126 may be wired or wireless. The data server 140, EMR server 142, the HCP server 144 may all be implemented on distinct computing devices at separate locations, or any subcombination of two or more of those entities may be co-implemented on the same computing device.

A wide variety of related data may be accessed for analysis purposes. For example, user specific data may be stored in a patient information database that may be operated by an electronic medical records (EMR) server 142. External databases either in the Cloud or locally may also provide additional data for the analysis of the health condition. For example, a health database operated by a health care provider server 144 may include "big data" from other respiratory therapy devices and corresponding patients through a health care provider. The database may also store relevant external data from other sources such as environmental data, scientific data, and demographic data. Such data may be analyzed and provided to health care actors via applications that may be executed on user devices that provide diagnosis, compliance and therapy management. An example of such an application is the AirView^{™} application.

In some implementations, the database 150 stores a profile associated with the user 110. The profile can include, for example, demographic information associated with the user, biometric information associated with the user, medical information associated with the user, self-reported user feedback, sleep parameters associated with the user (e.g., sleep-related parameters recorded from one or more earlier sleep sessions), or any combination thereof. The demographic information can include, for example, information indicative of an age of the user, a gender of the user, a race of the user, a geographic location of the user, a relationship status, a family history of insomnia, an employment status of the user, an educational status of the user, a socioeconomic status of the user, or any combination thereof. The medical information can include, for example, including indicative of one or more medical conditions associated with the user, medication usage by the user, or both. The medical information data can further include a multiple sleep latency test (MSLT) test result or score and/or a Pittsburgh Sleep Quality Index (PSQI) score or value. The self-reported user feedback can include information indicative of a self-reported subjective sleep score (e.g., poor, average, excellent), a self-reported subjective stress level of the user, a self-reported subjective fatigue level of the patient, a self-reported subjective health status of the user, a recent life event experienced by the user, or any combination thereof.

The EMR server 142 contains electronic medical records (EMRs), both specific to the users of the system and generic to a larger population of patients with similar disorders to the user 110. An EMR, sometimes referred to as an electronic health record (EHR), typically contains a medical history of a user, including previous conditions, treatments, co-morbidities, and current status. The EMR server 142 may be located, for example, at a hospital where any of the user have previously received treatment. The EMR server 142 is configured to transmit EMR data to the data server 140, possibly in response to a query received from the data server 140.

In this example, the HCP server 144 is associated with the health/home care provider (which may be an individual health care professional or an organization) that is responsible for the user's respiratory therapy. The HCP server 144 may host a process 182. One function of the HCP server process 182 is to transmit data relating to the patients to the data server 140, possibly in response to a query received from the data server 140.

In some implementations, the data server 140 is configured to communicate with the HCP server 144 to trigger notifications or action recommendations to an agent of the HCP such as a nurse, or to support reporting of various kinds. Details of actions carried out are stored by the data server 140 as part of the engagement data.

As may be appreciated, data in the data server 140, EMR server 142 and HCP server 144 is generally confidential data in relation to the patients in the system. Typically, patients must provide permission to send the confidential data to another party. Such permissions may be required to transfer data between servers 140, 142, and 144 if such servers are operated by different entities.

As explained herein, reliable transfer of data from the local database 150 and other databases such as those accessed by the EMR server 142 and the HCP server 144 to Cloud based storage system 160 is required. Further the databases managed by the EMR server 142 and the HCP server 144 may be based in the Cloud and thus data transfer occurs frequently to the Cloud based storage system 160. The example DRS is therefore used in all such data transfers to determine whether all data has been transferred successfully to the Cloud based storage system 160.

The servers 140, 142, and 144 are all a computer or network of computers. Although a simplified example is illustrated in FIG. 1, typically the application servers will be a server class system that uses powerful processors, large memory, and faster network components compared to a typical computing system used. The server typically has large secondary storage, for example, using a RAID (redundant array of independent disks) array and/or by establishing a relationship with an independent content delivery network (CDN) contracted to store, exchange and transmit data such as the asthma notifications contemplated above. Additionally, the computing system includes an operating system, for example, a UNIX operating system, LINUX operating system, or a WINDOWS operating system. The operating system manages the hardware and software resources of the application server and also provides various services, for example, process management, input/output of data, management of peripheral devices, and so on. The operating system provides various functions for managing files stored on a device, for example, creating a new file, moving or copying files, transferring files to a remote system, and so on.

Each server 140, 142, and 144 includes a software architecture for supporting access and use of data collected in the system 100 from the different data sources through the network 126 and stored in databases managed by the servers 140, 142 and 144. Thus, each of the servers 140, 142, and 144 include a network interface for transmitting and receiving data with a network such as the network 126 or the Cloud. Generally, each server is designed to handle a wide variety of data. As explained above, the servers may manage databases such as the database 140 that store database records via structured query language (SQL) based database applications. The servers include logical routines that perform a variety of functions including checking the validity of the incoming data, parsing and formatting the data if necessary (such as a relational database service (RDS) SQL), passing the processed data to the Cloud based databases in the Cloud storage system 160 for storage, and confirming that the database has been updated. Each of the servers has a set of database administrator utilities for managing database operations. The database administrator utilities may access a utilities database that stores a change data capture (CDC) table that stores log sequence numbers corresponding to data records streamed from the server such as to a Cloud service.

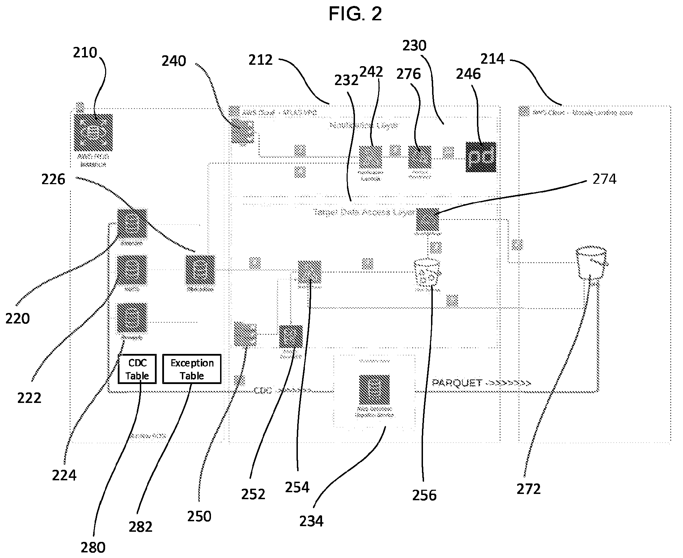

FIG. 2 shows a process flow for the transfer of data with the example routine from a local SQL database such as the database 150 in FIG. 1 to the Cloud based storage system 160. The Cloud based storage system 160 may be accessible to different actors such as a patient management service. In this example, the data is collected in databases that are managed by an SQL database instance such as an SQL database server 210. The database server 210 may use the relational database service (RDS). In this example the database server 210 may be associated with a specific patient management service such as the Airview Service offered by ResMed. The database service instance of the database server 210 may be operated by a server such as the server 140 that collects data such as data in the system 100. The database server 210 transfers data to a cloud provider 212 through a landing zone 214 specific to the patient management service, such as a S3 landing zone. In this example, the database service instance collects data for the purpose of managing patients with sleep-disordered breathing and respiratory insufficiency through respiratory therapy devices such as the respiratory therapy device 120 in FIG. 1. Thus, the database server 210 includes a user therapy data database 220, a next generation core standards (NGCS) database 222, and a resupply database 224. The databases 220, 222, and 224 are managed by a set of database administrator utilities that may access a utilities database 226.

The Cloud provider 212 includes a notification layer 230, a target access layer 232, and a database integration service 234 such as the database migration service (DMS) offered by AWS. The notification layer 230 includes a set of rules 240, a notification lambda service 242, and a pager duty service 246. In this example, the rules 240 include a Cloud watch rule that triggers the notification lambda service 242. The target access layer 232 includes a set of rules 250, a dynamo database 252, a data integration service object storage server parser lambda 254, and a Cloud trail log bucket 256. In this example, the rules 250 include a Cloud watch rule that triggers the notification lambda service 242. In this example, the Cloud trail log bucket 256 and notification layer 230 are based on an ATLAS document database service. In this example the parser lambda 254 is a service that parses file identification data from transferred files and the notification lambda 242 is a service that provides notifications to an operator.

When data such as that in records from a database such as the databases 220, 222, and 224 that are managed by the database server 210, are sent to the landing zone 214, the data is provided to an object storage service bucket 272. In this example, the object storage service for the bucket 272 is the AWS S3. Any sent data is logged in a change data capture (CDC) table 280 that is managed by the SQL database server 210.

The SQL database server 210 related to the AWS instance 270 keeps an internal transaction log that stores every transaction on the system. The database integration service 234 first reads the transactions from the active transaction log indicating inserted, deleted, or updated data in any of the databases 220, 222, and 224 via a change data capture (CDC) operation performed by the SQL database server 210. The database integration service 234 transforms the data from the transaction into Parquet format and stores the data into the object storage service bucket 272 of the landing zone 214.

Once the Parquet file is landed in the object storage service bucket 272 in the landing zone 214, a cloud trail target 274 is created. The cloud trail target 274 creates a log in the trail log bucket 256. Once a log with file details lands in the cloud trail bucket 274, a trigger is triggered to run the data integration service object storage server parser lambda 254. The parser lambda 254 extracts the file name from the log in the bucket 256, queries the landing zone bucket 272, parses the file and obtains the log sequence number (LSN) representing the offset, in bytes, of a log record from the beginning of a database log file. The LSNs obtained by the parser lambda 254 are stored into the DBA utilities database 226.

A continuously running job on the transferred data, compares the LSN data in the CDC tables 280 with the LSN data landed in the DBA utilities database 226. If any missing records are found (as indicated by missing LSNs), the job will log the records to an exception table 282 on the DBA utilities database 226. In this example, the Cloud watch rule of the rules 250 triggers the notification lambda service 242 to query the exception table 282 in the DBA utilities database 226 every 5 minutes. The lambda service 242 counts the number of missing transactions from the exception table 282. If any exceptions are found, a log is written to a cloud watch log group 276 that indicates the number of missing transactions. A filter and an alarm is set on the cloud watch log group 276 that sends the notification to the pager duty service 246 to further analyze the missing record. In this manner, the example DRS ensures that data integration to the Cloud land high fidelity data to targets in a low complexity process. This facilitates efficient transfer of data to the Cloud service.

If the parser lambda 254 fails to parse the file in the landing zone bucket 272 and store the transaction, the file name and table name will be stored into the dynamoDB table 252 for reprocessing. Failure of the parser lambda 254 may occur if there is connectivity issue between Cloud service provider accounts, components within such accounts, or if the lambda fails with some unknown parsing errors. The Cloud watch rule in the rules 250 triggers the same parser lambda 254 with an event reprocess true, once the parser lambda 254 sees the event reprocess it will check the Dynamo DB table 252 to see if there are any files for reprocessing. In this manner, missing transactions in the data stream will be flagged in the Cloud watch log group 276. The missing transactions will then be detected from the query from the notification lambda service 242.

In this example, the pager duty service 246 sends an alert to an operator. The alert, such as an email, may be sent to the operator stating that there is a missing transaction. The alert thus provides the information to the operator to quickly and efficiently resend the missing data and thus ensure reliability of the transaction. The email may include further details relating to the missing transaction that assist the operator to reprocess the missing transaction. Alternatively, the data integration service may include automated recovery of the missing transaction. Thus, since the transaction is already stored in the exception tables, the transaction is simply restreamed and converted into Parquet format to provide a robust schema, facilitate compression and allow for easy transformations. The restreamed data may then be stored into object storage service bucket 272 at the right location relative to already received records.

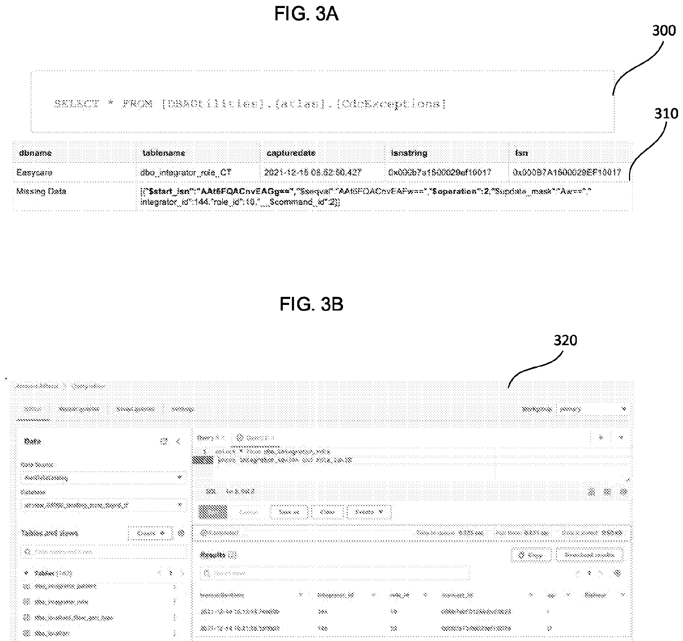

FIGs. 3A-3D show a sequence of screen images that are produced by the example system 200 in FIG. 2 to alert an operator of missing data from a data transfer to Cloud storage. FIG. 3A shows a query 300 for exceptions stored in the exceptions table 282 that is periodically sent from the notification layer 230 via the notification lambda 242 as explained above. In this example, an exception is recorded in the CDC exceptions table 282 for an Easycare data transfer from the DBA utilities database 262. In this example, a readout 310 from the exceptions table 282 indicates that an LSN (000b7a15:00029ef1:0017) was not found in the landing zone object storage service bucket 272 when querying Athena. The 310 readout lists the missing data. Although only one missing record is shown in this example for simplicity, the LSNs of all missing records will be shown in the readout.

FIG. 3B shows a screen image 320 of a detailed result to the query 300 in FIG. 3A. In this example, the query was directed toward determining missing records in the object storage service bucket 272. The results shown in the image 320 indicate, two transactions in the integrator_role table for that integrator_id and role_id. The first was an insert (operation = 2) and the second was an update (operation = 3) and they occurred within three minutes of each other. This may be an indication of the DMS missing a transaction.

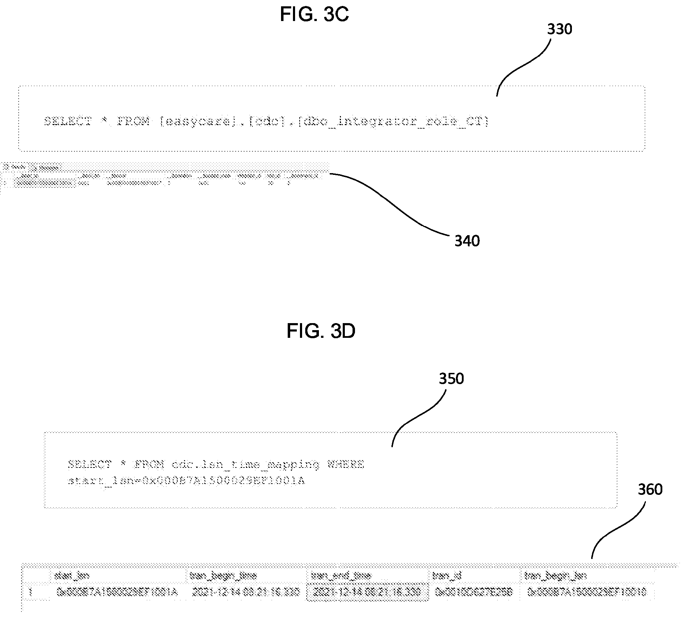

FIG. 3C shows a query 330 that checks the CDC tables of the SQL server such as the CDC table 280 in FIG. 2 for the missing transaction. In this example, the query 330 is sent by a user to determine information about the missing transaction. By implementing the query 330, the starting LSN for the transactions may be found. A results output 340 shows the data associated with the LSN that was missing.

FIG. 3D shows an example query 350 made by an operator for the LSN time mapping table for the starting LSN. The query gives the exact start time of the transaction. That transaction time matches the update transaction found in Athena: 2021-12-14 16:21:16.330000 UTC. The missing LSN number finishes in 0017 and the update record in 0014, so the two transactions would have occurred back to back. In this example, no data was lost in the transfer to the Cloud storage service, but there was a strange sequence of transactions. An insert, an update and another insert all with the same column values. The second insert should have failed in SQL Server, because it was a duplicate and the primary key is unique. Somehow the transaction still made it into the CDC.

Another example is detection of data loss from an outage on the Cloud service. For example, a major outage with DMS for a long period of times (greater than 12 hours) may result in lost transactions. In this example, the DRS allows identification of the missing transactions and assists in filling the gaps in data.

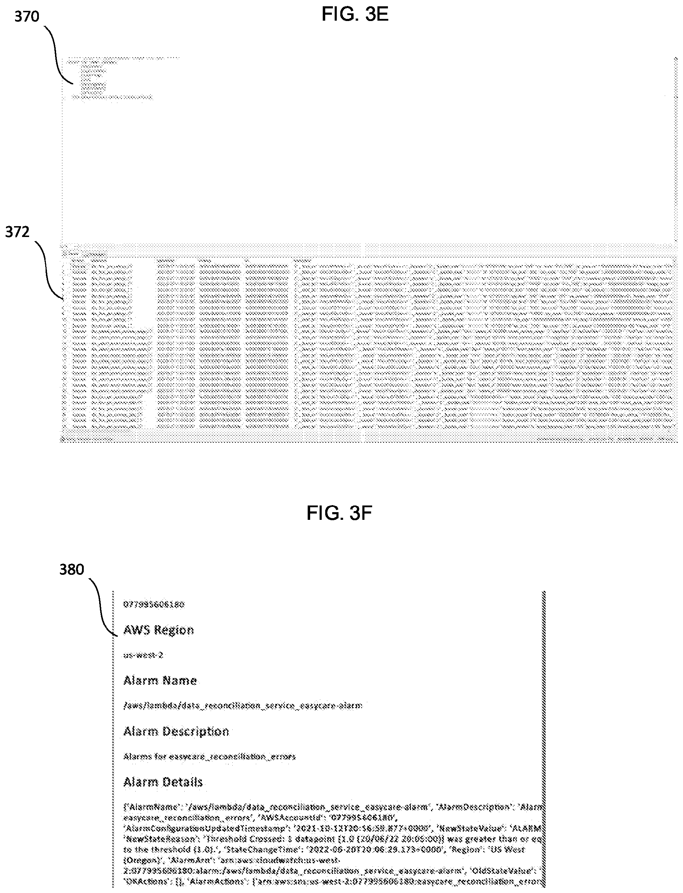

FIG. 3E shows a screen image of a command and an exception table showing the missing transactions produced by the example DRS. The screen image in FIG. 3E includes a set of commands 370 to the DRS to request missing transactions. The missing transactions are output to an exception table 372. The exception table 362 lists all of the missing transactions determined by the DRS in accordance with the process described herein.

FIG. 3F shows a summary 380 of an alarm that is triggered by the example DRS. The summary 380 includes the Cloud region running the DRS. The alarm name and description indicates that the Lambda of the DRS issued the alarm and the details of the alarm. In this example, the description indicates that reconciliation errors occurred due to missing transactions. The summary 380 includes a details section that provide a summary of the reconciliation errors, time stamps, and the threshold to trigger the alarm. The alarm and details of the error allow an operator to determine the missing transaction and correct the errors.

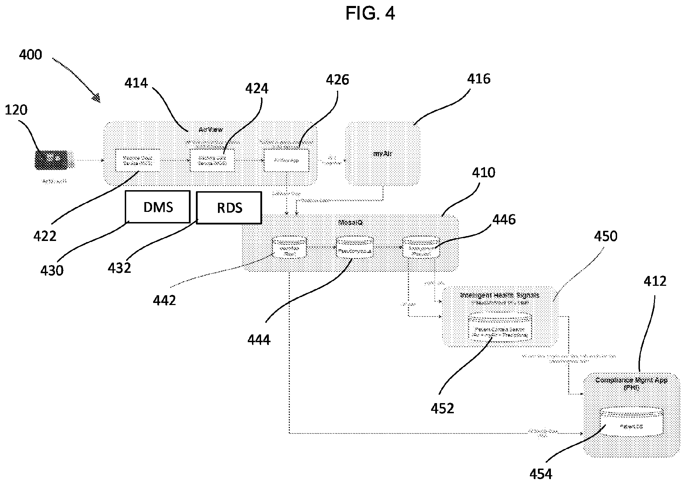

FIG. 4 is a flow diagram 400 of the collection of data for storage in a cloud database 410 for analysis applications such a compliance management application 412. In this example, local databases managed by a diagnosis, compliance and therapy management system 414 use the process in FIG. 2, to ensure efficient and accurate transfer of data to Cloud storage for access by the compliance application 412. In this example, a healthcare provider system runs the diagnosis, compliance and therapy management system 414 such as the AirView^{™} application to collect usage data from the respiratory therapy device 120 and other data sources in FIG 1. A personal patient information application 416 such as MyAir^{™} may receive collected operational data from the respiratory therapy device 120 for display to the user on a user device such as the user device 122 in FIG. 1. The data collected by the system 414 and application 416 is copied to an RDS system for storing the data. The patient management information system 414 periodically initiates data transactions to databases 410 in the Cloud.

In this example, the management system 414 includes a machine cloud service module 422, a machine data service module 424, and an application 426. The machine data service module 424 includes APIs such as the example DRS to reliably manage data in a local database that stores all raw device data received by the machine cloud service 422. The application 426 is integrated with a user device operated by a healthcare provider. The application 426 accesses a subset of the data from the machine data service 424 for different purposes such as diagnosis of the patient, compliance analysis of the patient, and therapy management of the patient.

In this example, the patient management information system 414 transfers data from the database to a Cloud based MOSAIQ database system 410 via a data migration service DMS 430 and an example DRS 432 managed by the Cloud system. The database system 410 includes an identified data repository 442, a pseudonymous data repository 444 and a fully anonymized data repository 446 that draw from the data lake that serves as the repository for the collected data from local databases. The identified or raw database 442 is a copy of the databases associated with the database accessed by the application 426 and a database accessed by the application 416. As explained above, the DMS 430 manages the copying of data from databases managed by the information system 414. The DRS 432 determines whether any data is missing in the transfer to the data lake.

The data from the identified data repository 442 is processed using a pseudonymizing routine to obscure protected health information (PHI) identifiers such as name and address and to merge the data sources together to form the data repository 444. Finally, the pseudonymized PHI is removed entirely using another process to create the anonymized data repository 446.

The Cloud based databases such as the data repository 446 may be accessed by various analysis applications such as a Cloud server. In this example, a machine learning engine 450 is the Intelligent Health Signals (IHS) system developed by ResMed. The machine learning engine 450 includes a database 452 that receives the anonymous data from the anonymized data repository 446 in the form of patient specific data received from the applications 426 and 416. For example, the diagnosis, compliance and therapy management application 426 provides basic patient information like name and address along with device usage whereas the personal application 416 provides more attributes about the patient like age, gender and mask selection and specialized data.

The machine learning engine 450 includes the compliance prediction model 420 that receives the results of a patient context search from the inputs from the diagnosis, compliance and therapy management application and the patient specific data from the personal application 416 and outputs a prediction for the patient that is stored in the database 452. The compliance management application 412 accesses the machine learning model and stores the output prediction and patient identity data received from the patient management information system 414 in a compliance database 454. The compliance management application 412 receives the compliance prediction and other anonymized data such as protected health information (PHI) from the machine learning engine and reintroduces the PHI data from the MOSAIQ raw database 442. The compliance management application 412 may be accessed by a user application that pulls patient data from the compliance database 454 and presents it to healthcare provider users.

Accurate analysis and operation of applications accessing data stored in the Cloud the compliance management application 412 depends on accurate and complete transfer from local sources. The example DRS 432 insures that accurate and complete transfer of data to the MOSAIQ cloud databases.

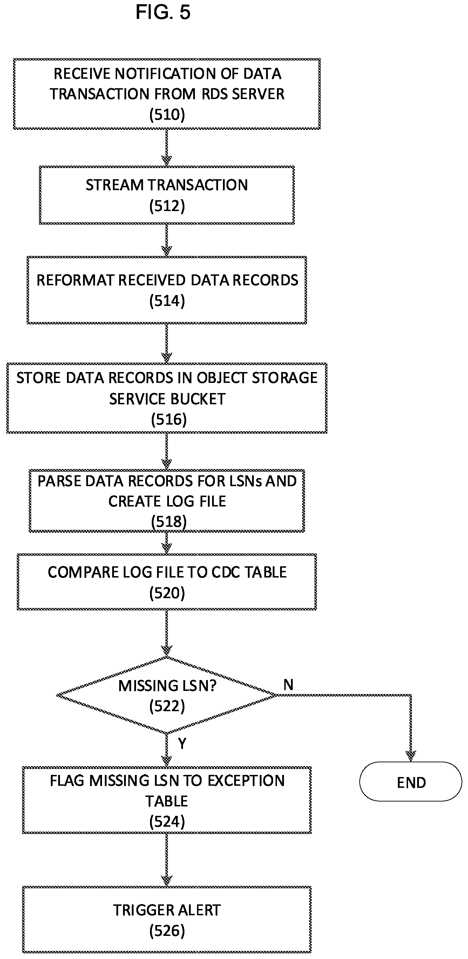

FIG. 5 shows a flow diagram for the reconciliation of data streaming to a Cloud based data lake. The flow diagram in FIG. 5 is representative of an example routine implementable by machine-readable instructions for the Cloud based storage system 160 and local servers such as the server 140 in FIG. 1. In this example, the machine-readable instructions comprise an algorithm for execution by (a) a processor; (b) a controller; and/or (c) one or more other suitable processing device(s). The algorithm may be embodied in software stored on tangible media such as flash memory, CD-ROM, floppy disk, hard drive, solid-state drive, digital video (versatile) disk (DVD), or other memory devices. However, persons of ordinary skill in the art will readily appreciate that the entire algorithm and/or parts thereof can alternatively be executed by a device other than a processor and/or embodied in firmware or dedicated hardware in a well-known manner (e.g., it may be implemented by an application-specific integrated circuit (ASIC), a programmable logic device (PLD), a field-programmable logic device (FPLD), a field-programmable gate array (FPGA), discrete logic, etc.). For example, any or all of the components of the interfaces can be implemented by software, hardware, and/or firmware. Also, some or all of the machine-readable instructions represented by the flowcharts may be implemented manually. Further, although the example algorithm is described with reference to the flowchart illustrated in FIG. 9, persons of ordinary skill in the art will readily appreciate that many other methods of implementing the example machine-readable instructions may alternatively be used. For example, the order of execution of the blocks may be changed, and/or some of the blocks described may be changed, eliminated, or combined.

The routine receives a notification of a data transaction from a relational database service (RDS) operated by the server (510). The sent data transaction is streamed via a data management service on the Cloud (512). The transaction includes a source RDS instance with log sequence numbers and corresponding data records. The log sequence numbers are stored in a change data capture (CDC) table in an administration database available to the server. The sent data is formatted to a different format such as Parquet via the data management service (514). The newly formatted data is stored into an object storage service bucket via a storage object service (516). The example data reconciliation service deploys a cloud trail target to parse the newly formatted data records and generate a log file of log sequence numbers from the sent data stored in the object storage service bucket (518). The cloud trail target accesses a parser Lambda to obtain the log sequence numbers. The agent of the server compares the log file of log sequence numbers with the log sequence numbers in the CDC table (520). If the log sequence numbers match (522), the routine ends. If the log sequence numbers do not match, the service flags a missing data record to an exception table in the administration database (524). The service then accesses the notice Lambda function to provide an alert of the missing transaction (526).

The disclosed example DRS operates based on the requirement that the landed data in the object storage service in the Cloud remains unmodified by manual or automated processes. The system is directed toward reconciling confirmed data loss when using a data integration service offered by a Cloud provider such as AWS. Regardless of source, target, and ingestion tool used data, reconciliation is a requirement for all data integration pipelines and thus the example DRS improves data integration processes.

The example DRS may be extended to monitor the data pipelines from a relational database service to any other Cloud based object storage services such as Snowflake or a data pipeline from a TIBCO database management service to Cloud based object storage services, and other types of data pipelines to the Cloud. The example DRS is very cost effective and monitors data pipelines in real time for potential data loss.

As used in this application, the terms "component," "module," "system," or the like, generally refer to a computer-related entity, either hardware (e.g., a circuit), a combination of hardware and software, software, or an entity related to an operational machine with one or more specific functionalities. For example, a component may be, but is not limited to being, a process running on a processor (e.g., digital signal processor), a processor, an object, an executable, a thread of execution, a program, and/or a computer. By way of illustration, both an application running on a controller, as well as the controller, can be a component. One or more components may reside within a process and/or thread of execution, and a component may be localized on one computer and/or distributed between two or more computers. Further, a "device" can come in the form of specially designed hardware; generalized hardware made specialized by the execution of software thereon that enables the hardware to perform specific functions; software stored on a computer-readable medium; or a combination thereof.

The terminology used herein is for the purpose of describing particular embodiments only and is not intended to be limiting of the invention. As used herein, the singular forms "a," "an," and "the" are intended to include the plural forms as well, unless the context clearly indicates otherwise. Furthermore, to the extent that the terms "including," "includes," "having," "has," "with," or variants thereof, are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art. Furthermore, terms, such as those defined in commonly used dictionaries, should be interpreted as having a meaning that is consistent with their meaning in the context of the relevant art, and will not be interpreted in an idealized or overly formal sense unless expressly so defined herein.

One or more elements or aspects or steps, or any portion(s) thereof, from one or more of any of claims can be combined with one or more elements or aspects or steps, or any portion(s) thereof, from one or more of any of the other claims or combinations thereof, to form one or more additional implementations and/or claims of the present disclosure.

While various embodiments of the present invention have been described above, it should be understood that they have been presented by way of example only, and not limitation. Although the invention has been illustrated and described with respect to one or more implementations, equivalent alterations and modifications will occur or be known to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application. Thus, the breadth and scope of the present invention should not be limited by any of the above-described embodiments. Rather, the scope of the invention should be defined in accordance with the following claims.

## Claims

1. A method of reconciling data sent from a database server (210) to a Cloud storage system (160), the method comprising:
receiving a data transaction from a structured query language, SQL, database operated by the server (210), the data transaction including a source instance with log sequence numbers and corresponding data records, wherein the log sequence numbers are stored in a change data capture, CDC, table (280);
streaming the data transaction via a Cloud based data integration service (234);
storing the data transaction into an object storage service bucket (272) via a storage object service;
executing a data reconciliation service that deploys a Cloud trail target (274) to generate a log file of log sequence numbers from the data transaction stored in the object storage service bucket (272);
comparing the log file of log sequence numbers with the log sequence numbers in the CDC table (280);
flagging a missing data record to an exception table (282) based on the comparison; and
providing an alert of the missing data record.

2. The method of claim 1, wherein the object storage service bucket (272)is an AWS, Amazon Web Services, S3 database or a Snowflake database.

3. The method of any one of claims 1-2, further comprising converting the sent data into a different format than the format of the data in the server, optionally wherein the different format is a Parquet file.

4. The method of any one of claims 1-3, further comprising periodically reviewing the exception table (282), and wherein providing the alert is based on the periodic review.

5. The method of claim 4, wherein a notification lambda service (242) periodically reviews the exception table (282), and the providing the alert is based on a cloud watch log entry.

6. The method of any one of claims 1-5, wherein the alert is an email, and optionally wherein the email includes further details relating to the missing transaction.

7. The method of any one of claims 1-6, wherein a structured query language agent on the server (210) compares the log sequence numbers and flags the missing data record to an exception table.

8. The method of any one of claims 1-7, wherein the log sequence numbers of the data transaction stored in the object storage service are determined by a parser lambda function (254).

9. The method of any one of claims 1-8, wherein the SQL server (210) operates a database service comprising one of a SQL or a TIBCO database management service.

10. The method of any one of claims 1-9, further comprising automatically determining the missing data record from the SQL database operated by the server (210).

11. A computer program product comprising instructions which, when executed by a computer, cause the computer to carry out the method of any one of claims 1-10.

12. A system to facilitate reliable data transfer to a Cloud based storage system (160), the system comprising:
a data integration service (234) receiving a data transaction from a structured query language, SQL, database operated by a server (210), the data transaction including a source instance with log sequence numbers and corresponding data records, wherein the log sequence numbers are stored in a change data capture, CDC, table (280);
a storage object service storing the data transaction into an object storage service bucket (272);
a data reconciliation service that deploys a Cloud trail target (274) to generate a log file of log sequence numbers from the data transaction stored in the object storage service bucket (272); and initiating an agent on the server (210) to compare the log file of log sequence numbers with the log sequence numbers in the CDC table (280); and
a notification service to flag a missing data record to an exception table (282) based on the comparison and provide an alert of the missing data record.

13. The system of claim 12, wherein the notification service periodically reviews the exception table (282), and wherein providing the alert is based on the periodic review, and optionally wherein the notification service includes a notification lambda service (242) periodically reviewing the exception table (282), and the alert is based on a cloud watch log entry.

14. The system of any one of claims 12 or 13, wherein a structured query language agent on the server (210) compares the log sequence numbers and flags the missing data record to the exception table (282).

15. A database server (210) coupled to the Cloud, the database server (210) comprising:
a storage database storing data records;
an interface operable to stream the data records to a Cloud service;
a change data capture, COC, table (280) storing log sequence numbers corresponding to data records streamed to the Cloud service, wherein the Cloud service including:
a data integration service (234) receiving data records;
a storage object service storing the sent data into an object storage service bucket (272);
a data reconciliation service that deploys a cloud trail target (274) to generate a log file of log sequence numbers from the sent data stored in the object storage service bucket (272); and
an agent that compares the log file of log sequence numbers with the log sequence numbers in the CDC table (280), the agent alerting a notification service of the Cloud service to flag a missing data record to an exception table (282) based on the comparison and provide an alert of the missing data record.

## Patentansprüche

1. Verfahren zum Abgleichen von Daten, die von einem Datenbankserver (210) an ein Cloud-Speichersystem (160) gesendet werden, wobei das Verfahren umfasst:
Empfangen einer Datentransaktion von einer Structured Query Language-, SQL-, Datenbank, die von dem Server (210) betrieben wird, wobei die Datentransaktion eine Quellinstanz mit Protokollfolgenummern und entsprechende Datensätze beinhaltet, wobei die Protokollfolgenummern in einer Change Data Capture-, CDC-, Tabelle (280) gespeichert sind;
Streamen der Datentransaktion über einen Cloud-basierten Datenintegrationsdienst (234);
Speichern der Datentransaktion über einen Speicherobjektdienst in einem Objektspeicherdienst-Bucket (272);
Ausführen eines Datenabgleichsdienstes, der ein Cloud-Trail-Ziel (274) einsetzt, um aus der in dem Objektspeicherdienst-Bucket (272) gespeicherten Datentransaktion eine Protokolldatei mit Protokollfolgenummern zu erzeugen;
Vergleichen der Protokolldatei mit Protokollfolgenummern mit den Protokollfolgenummern in der CDC-Tabelle (280);
Markieren eines fehlenden Datensatzes in einer Ausnahmetabelle (282) auf Basis des Vergleichs; und
Bereitstellen einer Warnung bezüglich des fehlenden Datensatzes.

2. Verfahren nach Anspruch 1, wobei der Objektspeicherdienst-Bucket (272) eine AWS-, Amazon Web Services-, S3-Datenbank oder eine Snowflake-Datenbank ist.

3. Verfahren nach einem der Ansprüche 1-2, das weiter Konvertieren der gesendeten Daten in ein anderes Format als das Format der Daten auf dem Server umfasst, wahlweise wobei das andere Format eine Parquet-Datei ist.

4. Verfahren nach einem der Ansprüche 1-3, das weiter das regelmäßige Überprüfen der Ausnahmetabelle (282) umfasst, und wobei Bereitstellen der Warnung auf der regelmäßigen Überprüfung basiert.

5. Verfahren nach Anspruch 4, wobei ein Benachrichtigungs-Lambda-Dienst (242) die Ausnahmetabelle (282) regelmäßig überprüft, und das Bereitstellen der Warnung auf einem CloudWatch-Protokolleintrag basiert.

6. Verfahren nach einem der Ansprüche 1-5, wobei die Warnung eine E-Mail ist, und wahlweise wobei die E-Mail weitere Einzelheiten in Zusammenhang mit der fehlenden Transaktion beinhaltet.

7. Verfahren nach einem der Ansprüche 1-6, wobei ein Structured Query Language-Agent auf dem Server (210) die Protokollfolgenummern vergleicht und den fehlenden Datensatz in einer Ausnahmetabelle markiert.

8. Verfahren nach einem der Ansprüche 1-7, wobei die Protokollfolgenummern der in dem Objektspeicherdienst gespeicherten Datentransaktion über eine Parser-Lambda-Funktion (254) bestimmt werden.

9. Verfahren nach einem der Ansprüche 1-8, wobei der SQL-Server (210) einen Datenbankdienst betreibt, der einen von einem SQL- oder einem TIBCO-Datenbankverwaltungsdienst umfasst.

10. Verfahren nach einem der Ansprüche 1-9, das weiter automatisches Bestimmen des fehlenden Datensatzes aus der von dem Server (210) betriebenen SQL-Datenbank umfasst.

11. Computerprogrammprodukt, das Anweisungen umfasst, die, wenn sie von einem Computer ausgeführt werden, bewirken, dass der Computer das Verfahren nach einem der Ansprüche 1-10 ausführt.

12. System, um verlässlichen Datentransfer in ein Cloud-basiertes Speichersystem (160) zu erleichtern, wobei das System umfasst:
einen Datenintegrationsdienst (234), der eine Datentransaktion von einer Structured Query Language-, SQL-, Datenbank empfängt, die von einem Server (210) betrieben wird, wobei die Datentransaktion eine Quellinstanz mit Protokollfolgenummern und entsprechende Datensätz beinhaltet, wobei die Protokollfolgenummern in einer Change Data Capture-, CDC-, Tabelle (280) gespeichert sind;
einen Speicherobjektdienst, der die Datentransaktion in einem Objektspeicherdienst-Bucket (272) speichert;
einen Datenabgleichsdienst, der ein Cloud-Trail-Ziel (274) einsetzt, um aus der in dem Objektspeicherdienst-Bucket (272) gespeicherten Datentransaktion eine Protokolldatei mit Protokollfolgenummern zu erzeugen; und Initiieren eines Agenten auf dem Server (210), um die Protokolldatei mit Protokollfolgenummern mit den Protokollfolgenummern in der CDC-Tabelle (280) zu vergleichen; und
einen Benachrichtigungsdienst, um einen fehlenden Datensatz auf Basis des Vergleichs in einer Ausnahmetabelle (282) zu markieren und eine Warnung bezüglich des fehlenden Datensatzes bereitzustellen.

13. System nach Anspruch 12, wobei der Benachrichtigungsdienst die Ausnahmetabelle (282) regelmäßig überprüft, und wobei Bereitstellen der Warnung auf der regelmäßigen Überprüfung basiert, und wahlweise wobei der Benachrichtigungsdienst einen Benachrichtigungs-Lambda-Dienst (242) beinhaltet, der die Ausnahmetabelle (282) regelmäßig überprüft, und die Warnung auf einem CloudWatch-Protokolleintrag basiert.

14. System nach einem der Ansprüche 12 oder 13, wobei ein Structured Query Language-Agent auf dem Server (210) die Protokollfolgenummern vergleicht und den fehlenden Datensatz in der Ausnahmetabelle (282) markiert.

15. Datenbankserver (210), der mit der Cloud gekoppelt ist, wobei der Datenbankserver (210) umfasst: eine Speicherdatenbank, die Datensätze speichert;
eine Schnittstelle, die betrieben werden kann, um die Datensätze an einen Cloud-Dienst zu streamen;
eine Change Data Capture-, CDC-, Tabelle (280), die Protokollfolgenummern speichert, die den an den Cloud-Dienst gestreamten Datensätzen entsprechen, wobei der Cloud-Dienst beinhaltet:
einen Datenintegrationsdienst (234), der Datensätze empfängt;
einen Speicherobjektdienst, der die gesendeten Daten in einem Objektspeicherdienst-Bucket (272) speichert;
einen Datenabgleichsdienst, der ein Cloud-Trail-Ziel (274) einsetzt, um aus den gesendeten Daten, die in dem Objektspeicherdienst-Bucket (272) gespeichert sind, eine Protokolldatei mit Protokollfolgenummern zu erzeugen; und
einen Agenten, der die Protokolldatei mit Protokollfolgenummern mit den Protokollfolgenummern in der CDC-Tabelle (280) vergleicht, wobei der Agent einen Benachrichtigungsdienst des Cloud-Dienstes warnt, um auf Basis des Vergleichs einen fehlenden Datensatz in einer Ausnahmetabelle (282) zu markieren und eine Warnung bezüglich des fehlenden Datensatzes bereitzustellen.

## Revendications

1. Procédé de rapprochement de données envoyées d'un serveur de base de données (210) vers un système de stockage dans le Cloud (160), le procédé comprenant :
la réception d'une transaction de données provenant d'une base de données de langage de requête structuré, SQL, exploitée par le serveur (210), la transaction de données incluant une instance source avec des numéros de séquence de journal et des enregistrements de données correspondants, dans lequel les numéros de séquence de journal sont stockés dans une table de capture de données modifiées, CDC, (280) ;
la diffusion de la transaction de données via un service d'intégration de données basé sur le Cloud (234) ;
le stockage de la transaction de données dans un compartiment de service de stockage d'objets (272) via un service d'objets de stockage ;
l'exécution d'un service de rapprochement de données qui déploie une cible Cloud Trail (274) pour générer un fichier journal de numéros de séquence de journal à partir de la transaction de données stockée dans le compartiment du service de stockage d'objets (272) ;
la comparaison du fichier journal de numéros de séquence de journal avec les numéros de séquence de journal dans la table CDC (280) ;
le signalement d'un enregistrement de données manquant dans une table d'exceptions (282) sur la base de la comparaison ; et
la fourniture d'une alerte concernant l'enregistrement de données manquant.

2. Procédé selon la revendication 1, dans lequel le compartiment de service de stockage d'objets (272) est une base de données AWS, Amazon Web Services, S3 ou une base de données Snowflake.

3. Procédé selon l'une quelconque des revendications 1 et 2, comprenant en outre la conversion des données envoyées dans un format différent du format des données sur le serveur, facultativement dans lequel le format différent est un fichier Parquet.

4. Procédé selon l'une quelconque des revendications 1-3, comprenant en outre un examen périodique de la table d'exceptions (282) et dans lequel la fourniture de l'alerte est basée sur l'examen périodique.

5. Procédé selon la revendication 4, dans lequel un service lambda de notification (242) examine périodiquement la table d'exceptions (282) et la fourniture de l'alerte est basée sur une entrée de journal de surveillance de Cloud.

6. Procédé selon l'une quelconque des revendications 1-5, dans lequel l'alerte est un courriel et éventuellement dans lequel le courriel inclut des détails supplémentaires relatifs à la transaction manquante.

7. Procédé selon l'une quelconque des revendications 1-6, dans lequel un agent de langage de requête structuré sur le serveur (210) compare les numéros de séquence de journal et signale l'enregistrement de données manquant à une table d'exceptions.

8. Procédé selon l'une quelconque des revendications 1-7, dans lequel les numéros de séquence de journal de la transaction de données stockée dans le service de stockage d'objets sont déterminés par une fonction lambda d'analyseur (254).

9. Procédé selon l'une quelconque des revendications 1-8, dans lequel le serveur SQL (210) exploite un service de base de données comprenant un service de gestion de base de données SQL ou TIBCO.

10. Procédé selon l'une quelconque des revendications 1-9, comprenant en outre la détermination automatique de l'enregistrement de données manquant dans la base de données SQL exploitée par le serveur (210).

11. Produit de programme informatique comprenant des instructions qui, lorsqu'elles sont exécutées par un ordinateur, amènent l'ordinateur à mettre en œuvre le procédé selon l'une quelconque des revendications 1-10.

12. Système pour faciliter un transfert fiable de données vers un système de stockage basé sur le Cloud (160), le système comprenant :
un service d'intégration de données (234) recevant une transaction de données d'une base de base de données de langage de requête structuré, SQL, exploitée par un serveur (210), la transaction de données incluant une instance source avec des numéros de séquence de journal et des enregistrements de données correspondants, dans lequel les numéros de séquence de journal sont stockés dans une table de capture de données modifiées, CDC, (280) ;
un service d'objets de stockage stockant la transaction de données dans un compartiment de service de stockage d'objets (272) ;
un service de rapprochement de données qui déploie une cible Cloud trail (274) pour générer un fichier journal de numéros de séquence de journal à partir de la transaction de données stockée dans le compartiment de service de stockage d'objets (272) ; et qui lance un agent sur le serveur (210) pour comparer le fichier journal de numéros de séquence de journal avec les numéros de séquence de journal de la table CDC (280) ; et
un service de notification pour signaler un enregistrement de données manquant dans une table d'exceptions (282) sur la base de la comparaison et fournir une alerte sur l'enregistrement de données manquant.

13. Système selon la revendication 12, dans lequel le service de notification examine périodiquement la table d'exceptions (282) et dans lequel la fourniture de l'alerte est basée sur l'examen périodique et facultativement dans lequel le service de notification inclut un service lambda de notification (242) examinant périodiquement la table d'exceptions (282) et l'alerte est basée sur une entrée de journal de surveillance de Cloud.

14. Système selon l'une quelconque des revendications 12 ou 13, dans lequel un agent de langage de requête structuré sur le serveur (210) compare les numéros de séquence de journal et signale l'enregistrement de données manquant à la table d'exceptions (282).

15. Serveur de base de données (210) couplé au Cloud, le serveur de base de données (210) comprenant: une base de données de stockage stockant des enregistrements de données ;
une interface permettant de diffuser les enregistrements de données sur un service Cloud ;
une table de capture de données modifiées, CDC, (280) stockant des numéros de séquence de journal correspondant à des enregistrements de données transmis au service Cloud, dans lequel le service Cloud inclut :
un service d'intégration de données (234) recevant des enregistrements de données;
un service d'objets de stockage stockant les données envoyées dans un compartiment de service de stockage d'objets (272) ;
un service de rapprochement de données qui déploie une cible Cloud Trail (274) pour générer un fichier journal de numéros de séquence de journal à partir des données envoyées stockées dans le compartiment de service de stockage d'objets (272) ; et
un agent qui compare le fichier journal de numéros de séquence de journal avec les numéros de séquence de journal dans la table CDC (280), l'agent alertant un service de notification du service Cloud pour signaler un enregistrement de données manquant dans une table d'exceptions (282) sur la base de la comparaison et fournir une alerte de l'enregistrement de données manquant.
